(19) **Europäisches Patentamt**
European Patent Office
Office européen des brevets

(11) **EP 3 304 495 B1**

(12) **EUROPÄISCHE PATENTSCHRIFT**

(45) Veröffentlichungstag und Bekanntmachung des Hinweises auf die Patenterteilung:
**06.11.2019 Patentblatt 2019/45**

(21) Anmeldenummer: **16744295.3**

(22) Anmeldetag: **02.06.2016**

(51) Int Cl.:
***G06T 7/62*** *(2017.01)*

(86) Internationale Anmeldenummer:
**PCT/EP2016/000896**

(87) Internationale Veröffentlichungsnummer:
**WO 2016/192853 (08.12.2016 Gazette 2016/49)**

(54) **VERFAHREN UND VORRICHTUNG ZUR BESTIMMUNG BIOMETRISCHER EIGENSCHAFTEN VON WIRBELTIEREN, INSBESONDERE DES GEWICHTES VON SCHWEINEN**

METHOD AND APPARATUS FOR DETERMINING BIOMETRIC PROPERTIES OF VERTEBRATES, IN PARTICULAR THE WEIGHT OF PIGS

PROCÉDÉ ET DISPOSITIF DE DÉTERMINATION DES PROPRIÉTÉS BIOMÉTRIQUES D'ANIMAUX VERTÉBRÉS, NOTAMMENT DU POIDS DES PORCS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.06.2015 AT 3482015**

(43) Veröffentlichungstag der Anmeldung:
**11.04.2018 Patentblatt 2018/15**

(73) Patentinhaber: **Wuggl GmbH**
**8403 Lang (AT)**

(72) Erfinder:
- **KATZ, Hermann**
 **8042 Graz (AT)**
- **SCHWEINZGER, Marcus**
 **8403 Lebring (AT)**
- **TEMMEL, Alois**
 **8403 Lang (AT)**

(74) Vertreter: **Peham, Alois**
**c/o Siemens AG Österreich**
**Siemensstrasse 90**
**1210 Wien (AT)**

(56) Entgegenhaltungen:
**US-B1- 8 588 476**

- **PAOLO MENESATTI ET AL: "A low-cost stereovision system to estimate size and weight of live sheep", COMPUTERS AND ELECTRONICS IN AGRICULTURE, Bd. 103, 1. April 2014 (2014-04-01), Seiten 33-38, XP055296927, AMSTERDAM, NL ISSN: 0168-1699, DOI: 10.1016/j.compag.2014.01.018**
- **SAKIR TASDEMIR ET AL: "Determination of body measurements of a cow by image analysis", COMPUTER SYSTEMS AND TECHNOLOGIES AND WORKSHOP FOR PHD STUDENTS IN COMPUTING; 20080612 - 20080613, 1. Januar 2008 (2008-01-01), Seiten V.8-1, XP058022168, DOI: 10.1145/1500879.1500956 ISBN: 978-954-9641-52-3**
- **VELARDO C ET AL: "Weight estimation from visual body appearance", BIOMETRICS: THEORY APPLICATIONS AND SYSTEMS (BTAS), 2010 FOURTH IEEE INTERNATIONAL CONFERENCE ON, IEEE, PISCATAWAY, NJ, USA, 27. September 2010 (2010-09-27), Seiten 1-6, XP031800564, ISBN: 978-1-4244-7581-0**
- **Tscharke M ET AL: "Review of Methods to Determine Weight and Size of Livestock from Images", Australian Journal of Multi-Disciplinary Engineering, 1. Januar 2013 (2013-01-01), Seiten 1-17, XP055297518, DOI: 10.7158/14488388.2013.11464860 Gefunden im Internet: URL:http://www.tandfonline.com/doi/abs/10.7158/14488388.2013.11464860 [gefunden am 2016-08-25]**

- **ZHUO LI ET AL: "Estimation of Pig Weight by Machine Vision: A Review", 1. Januar 2014 (2014-01-01), COMPUTER AND COMPUTING TECHNOLOGIES IN AGRICULTURE VII,, PAGE(S) 42 - 49, XP009191447, Zusammenfassung Abschnitte 2.1,2.3,3.**

**Beschreibung**

Die Erfindung betrifft ein Verfahren zur Bestimmung biometrischer Eigenschaften von Wirbeltieren und eine Vorrichtung zur Durchführung des Verfahrens.

Die Bestimmung biometrischer Maße wie insbesondere des Gewichtes von Tieren ist insbesondere in der Nutz-, Haus-, und Heimtierhaltung von besonderer Bedeutung. Zum einen ist das Gewicht eines Tieres ein Hinweis auf den Gesundheitszustand und zum anderen ein wesentlicher Faktor für das Management des Aufzuchtprozesses.

So können beispielsweise die Futterzuteilung und die Futterrationsgestaltung auf den Gewichtsverlauf eines Tieres abgestimmt oder auffällige Tiere einer besonderen Untersuchung zugeführt werden.

Da das Wiegen mittels Waagen sehr arbeitsaufwendig und stressreich für Mensch und Tier ist, werden nach dem Stand der Technik berührungslose Meßverfahren zur Gewichtsbestimmung vorgeschlagen.

Aus der WO 92/14116 ist ein Verfahren bekannt, bei dem mittels eines Schiebegestells Leuchtpunkte oder Leuchtbalken auf das Tier projiziert werden, um damit die Schulterbreite und die Körperlänge festzustellen. Über eine festgelegte Bewertungsskala mit Punktbewertungen von 1 bis 6 wird festgestellt, ob ein Tier schlachtreif ist.

Die in dieser Schrift vorgestellte Methode liefert aber nur ungenaue Ergebnisse.

Außerdem ist das Positionieren der Leuchtmarken auf dem Tier mit relativ großen Fehlern behaftet.

Weiterhin ist es aus der DE 196 190 99 C1 bekannt, Geflügelschlaehttierkörper mittels bildlicher Erfassung und elektronischer Bildverarbeitung hinsichtlich Körpermasse und Zusammensetzung des Schlachtkörpers zu analysieren.

Dabei werden an beiden Beinen aufgehängte Schlachttierkörper mittels eines Förderaggregates in definiertem Abstand an einer Videokamera bzw. Bilderfassungseinheit vorbeigeführt und bereits vor der Zerlegung bewertet. Mit der Erfassung von Außenkontüren und unter Zuhilfenahme bestimmter Körperpunkte sowie mittels einer Approximation eines ovalen Bereiches des Geflügelrumpfes, Stärke der Oberkeulen und dgl. erfolgt die Gewichtsbestimmung des an beiden Beinen hängenden Geflügelkörpers und einzelner Körperteile vorzugsweise in Echtzeit, um so im Verärbeitungsprozeß Einfluß auf die Sortierung und Bewertung der Schlachtkörper nehmen zu können.

In der WO 95/23 336 wird ein Verfahren beschrieben, bei dem mittels Wärmebildkamera ein Bereich mit Nutztieren erfasst wird und aus den als Nutztiere erkannten Flächen durch Zählung der zugeordneten Bildpunkte ein Gewicht ermittelt wird.

Die WO 2014/026765 beschreibt ein Verfahren zur Erlangung von relevanten Informationen - wie dem Gewicht - zu einem lebenden Nutztier, vorzugsweise einem Schwein. Dabei wird mittels eines mobilen 3D-Kamerasystems ein Abbild des Nutztieres erstellt. Basierend auf den Sensordaten wird ein 3D-Volumenmodell des Nutztieres gebildet. Dabei wird als ein glattes, wohldefiniertes, aber vereinfachtes Modell eines Schweinekörpers erzeugt. Das nachgebildete Körpermodell wird mittels Freiformflächen beschrieben, wofür mindestens 24 Stützpunkte (bevorzugt 48) herangezogen werden um das Volumenmodell zu definieren. Das Volumenmodell beschreibt eine reduzierte Köpetform und stellt somit eine vereinfachte Darstellung eines Schweinekörpers dar. Weiters ist für die Gewichtsberechnung ein Datenbestand von dreidimensional und insbesondere standardisierte Volumen bzw. Kürpermodelle des Nutztieres notwendig, die vorab durch eine Vielzahl an Daten gebildet und im System hinterlegt sind. Durch die Anpassung dieses Referenzmodells an das Körpermodell des zu vermessenden Schweins werden die Gewichtsdaten ermittelt. Dabei werden die beiden Volumenmodelle (gemessenes und Referenz-Modell aus der Datenbank) verglichen um herauszufinden wie groß der Unterschied ist, bzw. wo der Unterschied in den Volumenrnodellen ist.

Aus Paolo Menesatti et al: "A low cost stereovision system to estimate size and weight of live sheep", Computers and Electronics in Agriculture, Bd. 103, 1. April 2014, Seiten 33-38, XP055296927, Amsterdam ist ein Verfahren zur Bestimmung der Größe und des Gewichtes von Schafen bekannt, bei dem mit einem Kamerasystem Aufnahmen der Schafe erstellt werden, aus den Aufnahmen markante Punkte der KöperOberfläche ermittelt werden, weiterhin aus den markanten Punkten der Oberfläche Parameter eines statistischen Modells des Wirbeltieres erstellt und mittels statistischem Modell die biometrischen Eigenschaften des Tieres bestimmt werden.

Der Erfindung liegt die Aufgabe zugrunde, den Stand der Technik weiterzuentwickeln.

Diese Aufgabe wird erfindungsgemäß gelöst mit einem Verfahren gemäß Anspruch 1.

Vorteilhafte Ausführungen ergeben sich aus den Unteransprüchen.

Die Erfindung ermöglicht es, die Tiere direkt in ihrem Lebensraum zu vermessen, ohne sie in eine bestimmte Position bringen zu müssen. Dabei können sowohl einzeln freistehende Tieren, als auch Gruppen vermessen werden und sie können beliebige Stellungen einnehmen; stehend, fressend, gehend, gekrümmt, gebeugt.

Detaillierte Beschreibung der Erfindung

Die Erfindung wird anhand zweier Figuren näher erläutert, welche schematisch -dies Anordnung von markanten Punkten an der Oberfläche eines Schweines zeigen.

Eine bevorzugte Ausführungsform des erfindungsgemäßen Verfahrens betrifft die Bestimmung des Gewichtes von Schweinen.

Dabei wird in einem ersten Schritt mit einem mobilen Kamerasystem zumindest eine Aufnahme des Schweines erstellt, wobei besonders gute Ergebnisse dann erzielt werden, wenn die Aufnahme von schräg oben erfolgte Die Aufnahme kann auch mit einer stationär oberhalb einer Gatterschleuse oder einer Bucht angebrächten Kamera erfolgen und die Daten können bei der weiteren Steuerung der Gatterschleuse oder beispielsweise eines Fütterungsautomaten mitberücksichtigt werden.

Für die Aufnahme der Bildinformationen vom Körper des Tieres können unterschiedliche Aufnähmetechnologie wie time of flight (TOF)-Kameras, Laserscanner, aktive oder passive Stereokameras, Streifenprojektoren, Lightfield-Kameras eingesetzt werden.

Vorzugsweise wird dazu eine Stereokamera verwendet, also ein Gerät zur Aufnahme von stereoskopischen Fotografien.

Stereokameras besitzen in der Regel zwei nebeneinander angebrachte Objektive und ermöglichen beim Auslösen die gleichzeitige Aufnahme der für 3D-Bilder erforderlichen beiden stereoskopischen Halbbilder. Die Belichtunqssteuerung und Schärfeneinstellung beider Objektive sind gekoppelt.

Um eine raumtreue Wiedergabe zu gewährleisten, haben die beiden Objektive meist einen Abstand von 60-70 mm (gebannt Basis), was dem durchschnittlichen Augenabstand beim Menschen entspricht, durch dessen Variation aber verschiedene Effekte erzielt werden.

Denkbar wäre es dabei auch, zwei gleichartige, herkömmliche Kameras mit einer Montageschiene zu einer Stereokamera zu kombinieren wobei digitale Kameras über eine digitale Ansteuerung synchron ausgelöst werden können.

Dabei kann es auch zweckmäßig sein, wenn zum Zeitpunkt der Aufnahme mit geeigneten Projektionsmitteln ein optisches Muster auf das zu erfassende Tier projiziert wird. Dies dient als Verbesserung des Stereo-Bildaufnahmeverfahrens um die Genauigkeit der Messdaten zu verbessern und das Einsatzfeld zu erweitern.

Aus der so erhaltenen Aufnahme kann mittels Freistellung störender Hintergrund entfernt werden und so die weitere Verarbeitung erleichtert werden.

Danach werden mit Methoden der Mustererkennung, beispielsweise unter Einsatz eines maschinellen Lernalgorithmus Körperteile des Tieres erkannt. Diese Informationen werden auch für die Ermittlung der räumlichen Ausrichtung des Tieres, insbesondere der Lage und ggf. einer Krümmung der Körper-Längsachse und der Lage von einzelnen Körperteilen, wie dem Kopf herangezogen. Gegebenenfalls, d.h. wenn beispielsweise eine Krümmung der Körper-Längsachse erkannt wird, kann eine Begradigung der Aufnahme erfolgen. Dadurch kann die Genauigkeit der Gewichtsbestimmung weiter erhöht werden.

Auf Basis der solcherart vorverarbeiteten Aufnahme werden ebenfalls mit Mitteln der Mustererkennung markante Punkte der Körperoberfläche des Tieres ermittelt.

Beim Ausführungsbeispiel ist dies eine Auswahl der folgenden Punkte, deren Lage in den Figuren dargestellt ist.

| | |
|---|---|
| Schwanzansatz | M1SA |
| Ohra&satz-rechts | M2OAR |
| Ohransatz-links | M3OAL |
| Nacken | M4N |
| Nasenspitze | M5NS |
| Schulter rechts | M6SR |
| Schulter links | M7SL |
| Brust rechts | M8BR |
| Brust links | M9BL |
| Flanke rechts | M10FR |
| Flanke links | M11FL |
| Schinken rechts | M12SR |
| Schinken links | M13SL |
| Hüft-Höcker rechts | M14HHR |
| Hüft-Höcker links | M15HHL |
| Rumpf rechts | M16RR |
| Rumpf links | M17RL |
| Schulter Mitte (Verlängerung zu Punkt am Rücken) | M18xSM |
| Brust Mitte (Verlängerung zu Punkt am Rücken) | M19xBM |
| Flanke Mitte (Verlängerung zu Punkt am Rücken) | M20xFM |

(fortgesetzt)

| | |
|---|---|
| Schinken Mitte (Verlängerung zu Punkt am Rücken) | M21xSM |
| Bauch Mitte (Verlängerung zu Punkt am Rücken) | M22xBAM |
| Ellbogen-links | M23EL |
| Ellbogen-rechts | M24ER |
| Kniescheibe-links | M25KL |
| Kniescheibe-rechts | M26KR |
| Ferse-links | M27FEL |
| Ferse-rechts | M28FER |
| Ohr oben-links | M2900L |
| Ohr oben-rechts | M3000R |
| Zehe vorne links | M31ZVL |
| Zehe vorne rechts | M32ZVR |
| Zehe hinten links | M33ZHL |
| Zehe hinten rechts | M34ZHR |
| Kniescheibe Mitte (Verlängerung zu Punkt am Rücken) | M35xKM |

Nicht alle dieser Punkte werden mit jeder Aufnahme bestimmbar sein, so werden sich ggf. bei einer bevorzugten Aufnahmeposition von schräg oben die Punkte an der Unterseite des Tieres wie beispielsweise die Positionen der Kniescheiben M25-KL, M26-KR nicht einwandfrei bestimmen lasse. Dies stellt jedoch keine wesentliche Einschränkung des erfindungsgemäßen Verfahrens dar.

Aus den ermittelten markanten Punkten der Körperoberfläche des Tieres werden die Parameter eines statistischen Modells des Schweines bestimmt.

Beim Ausführungsbeispiel wurden die Parameter gemäß der folgenden Tabelle genutzt:

| Parameter | Distanz zwischen Konturpunkten |
|---|---|
| Brustkorbumfang | Berechnung gemäß Formel 1 |
| LärtgeSchulterOhr | M6SR zu M2OAR |
| LängeSchwanzOhr | M1SA zu M2OAR |
| LärigeS.chwanzSchulter | M1SA zu M6SR |
| LängeSchwanzNackenGerade | M1SA zu M4N |
| LängeSchwanSchulterGerade | M1SA zu M18xSM |
| Flankenbreite | M10FR zu M11FL |
| RSchulterZuLHüfte | M6VR zu M11FL |

Möglich wären auch weitere Parameter auf der Basis euklidischer und/oder geodätischer Distanzen zwischen unterschiedlichen Konturpunkten und von geodäsischen Flächen zwischen unterschiedlichen Punkten.

Aus den Parametern wird mittels statistischem Modell gemäß

$$\text{Gew} = K_0 + P_1 * K_1 + P_2 * K_2 + \ldots + P_n * K_n$$

Mit

$P_1, P_2, \ldots, P_n$    Parameter und
$K_1, K_1, \ldots, K_n$    Konstante
Gew              Gewicht des Tieres

nun das Gewicht des Tieres bestimmt.

Dazu werden die folgenden in der Tabelle dargestellten Parameter $P_1, P_2, \ldots, P_8$ mit $P_1$ = Brustteorbumfang, P2 = LängeSehulterOhr usw. und die Konstanten $K_0, K_1, \ldots, K_8$ angewandt. Die Konstanten wurden dabei durch Anpassung des Modells an gemessene und zusätzlich gewogene Tiere bestimmt, mit anderen Worten, die Konstanten sind das Ergebnbnis der statistischen Erfassung der Tiere und geben die statistische Abhängigkeit der zu ermittelnden biometrischen Eigenschaft von einem bestimmten Parameter wieder.

| P | Parameter Ausführungsbeispiel | K | Konstante Ausführungsbeispiel |
|---|---|---|---|
| | | $K_0$ | -95 |
| $P_1$ | Brustkorbumfang | $K_1$ | 1.5 |
| $P_2$ | LängeSchulterOhr | $k_2$ | -0,5 |
| $P_3$ | LängeSchwanzOhr | $K_3$ | 0.4 |
| $P_4$ | LängeSchwanzSehulter | $K_4$ | -0.3 |
| $P_5$ | LängesSchwanzNackenGerade | $K_5$ | 0.2 |
| $P_6$ | LängeSchwanzSchulterGerade | $K_6$ | -0.3 |
| $P_7$ | Flankenbreite | $K_7$ | 0.6 |
| $P_8$ | RSchulterZuLHüfte | $K_8$ | 0.4 |

Das Gewicht eines Schweines Gew wird daher nach dem Ausführungsbeispiel wie folgt ermittelt:

```
Gew = -95
      + 1.5 * Brustkorbumfang
      - 0.5 * LängeSchulterOhr          .
      + 0.4 * LängeSchwanzOhr
      - 0.3 * LängeSchwanzSchulter
      + 0.2 * LängeSchwanzNackenGerade
      - 0.3 * LängeSchwanzSchulterGerade
      + 0.6 * Flankenbreite
      + 0.4 * RSchulterZuLHüfte
```

Dabei wird der Brustkorbumfang ebenfalls

$$\text{gemäß Brustkorbumfang} = K_{10} + P_{11}*K_{11} + P_{12}*K_{12} + \ldots + P_n*K_n$$

aus den Parametern $P_{11}$, $P_{12}$, ..., $P_{32}$ der folgenden Tabelle bestimmt, wobei diese Parameter teilweise durch Multiplikation aus anderen Parametern gewonnen wurden. So wird beispielsweise Parameter P19 durch Multiplikation gemäß (LängeSchwanzSchulter) * (RSchulterZuLSchinken) oder (M1SA zu M6SR) * (M6SR zu M13SL) gewonnen.

| Parameter (Eingabegröße) | Distanz zwischen Punkten an der Oberfläche | Parameter |
|---|---|---|
| Länge Schulte rOhr | M6SR zu M2OAR | P11 |
| LängeSchwanzOhr | M1SA zu M2OAR | P12 |
| LängeSchwanzSchulter | M1SA zu M6SB | P13 |
| LängeSchwanzSchulterGerade | M19A zu M18xSM | P14 |
| Brustbreite | M8BR zu M9BL | P15 |
| Flankenbereite | M10FR zu M11FL | P16 |
| LBrustZuRFlanke | M9BL zu M10FR | P17 |
| LSchulterZuRSchinken | M7SL zu M12SR | P18 |

(fortgesetzt)

| Parameter (Eingabegröße) | Distanz zwischen Punkten an der Oberfläche | Parameter |
|---|---|---|
| (LängeSchwanzSchulter) *(RSchulterZuLSchinken) | (M1SA zu M6SR) * (M6SR zu M13SL) | P19 |
| (LängeSchwanzSchulterGerade) * (LängeSchwanzOhrGerade) | (M1SA zu M18×SM) *(M1SA zu M4N) | P20 |
| (Brustbreite) * (LängeSchwanzOhrGerade) | (M8BR zu M9BL) * (M1SA zu M4N) | P21 |
| (LängeSchwanzOhrGerade) * (Schinkenbreite) | (M1SA zu M4N) * (M12SR zu M139L) | P22 |
| (Flankenbreite) * (LängeSchwanzOhrGerade) | (M10FR zu M11L) * (M1SA zu M4N) | P23 |
| (LängeSchwanzOhrGerade) * (RBrustZuLFlanke) | (M1sA zu M4N) * (H8TBR zu M13RL) | P24 |
| (LSchulterZuRSchinken) * (LängeSchwanzOhrGerade) | (M7SL zu M12SR) * (M1SA zu M4N) | P25 |
| (RSchulterZuLSchinken) * (LängeSchwanzOhrGerade) | (RSchulterZuLSchinken) * (M1SA zu M4N) | P26 |
| (LängeSchwanzSchulterGerade) * (Flankenbreite) | (M1SA zu M18xSM) * (M10FR zu M11FL) | P27 |
| (LängeSchwahzSchulterGerade)* (RBrustZuLFlanke) | (M1SA zu M18xSM) * (M8BR zu M13SL) | P28 |
| (LängeSchwanzSchulterGerade) * (LSchulterZuRSchinken) | (M1SA zu M18xSM) * (M7SL zu M12SR) | P29 |
| (LängeSchwanzSehulterGerade) * (RSchülterZuLSchinken) | (M1SA zu M18xSM) * (RSchulterZuLSchinken) | P30 |
| (Brustbreite) * (Flankenbreite) | (M8BR zu M9BL) * (M10F-R zu M11FL) | P31 |
| (Brustbreite) * (RBrustZuLFlanke) | (M.8BR zu M9BL) * (M8BR zu M13SL) | P32 |
| (Brustbreite) * (RSchulterZuLSchinken) | (M8BR zu M9BL) * (M6SR zu M13SL) | P33 |
| (Flankenbreite) * (Schinkenbreite) | (M10FR zu M11FL) * (M12SR zu M13SL) | P34 |
| (LSchulterZuRSchinken) * (Schinkenbreite) | (M7SL zu M12SR) * (Mi2SR zu M13SL) | P35 |
| (Flankenbreite) * (LSChulterZuRSthinken) | (M10FR zu M11FL) * (M7SL zu M12SR) | P36 |
| (RSchulterZuLSchinken) * (RBrustZuLFlanke) | (M6SR zu M13SL) * (M8BR zu M13SL) | P37 |
| (LSchulterZuRSchinken) * (RSchülterZuLSchinken) | (M7SL zu M12SR) * (M6SR zu K13SL) | P38 |

Auch bei der Bestimmung des Brustkorbumfanges werden die entsprechenden Konstanten $K_{10}$, $K_{11}$, ...., $K_{30}$ durch Vergleich mit gewogenen Tiere bestimmt und geben die statistische Abhängigkeit des zu ermittelnden Brustkorbumfangs von einem bestimmten Parameter wieder.

| Konstante | Wert |
|---|---|
|  |  |
| K10 | 12.7 |
| K11 | -0.7 |
| K12 | 0.2 |
| K13 | -8.6 |
| K14 | 5.1 |
| K15 | 77.7 |
| K16 | -43.0 |
| K17 | 1.5 |
| K18 | -9.2 |

(fortgesetzt)

| Konstante | Wert |
|-----------|------|
| K19 | 0.1 |
| K20 | -0.1 |
| K21 | -0.7 |
| K22 | 0.3 |
| K23 | 0.5 |
| K24 | 0.1 |
| K25 | 0.5 |
| K26 | -0.5 |
| K2.7 | 0.4 |
| K28 | 0.1 |
| K29 | -0.4 |
| K30 | 0.3 |
| K31 | -1.1 |
| K32 | -0.3 |
| K33 | 0.5 |
| K34 | 0.5 |
| K35 | -0.6 |
| K36 | -0.3 |
| K37 | -0.1 |
| K38 | 0.2 |

Eine Überprüfung der Ergebnisse ergab eine sehr zufriedenstellende Übereinstimmung des tatsächlichen Gewichtes mit den erfindungsgemäß ermittelten Werten.

Die Bestimmung des Gewichtes von Schweinen stellt ein bevorzugtes Anwendungsgebiet der Erfindung dar. Grundsätzlich ist aber ein vorteilhafter Einsatz auch bei anderen Tieren, insbesondere bei Nutztieren wie Rinder, Pferden, Schafen oder auch Fischen, sowie bei Haustieren wie Hunden oder Katzen oder grundsätzlich auch beim Menschen denkbar.

Dabei kann das Verfahren über die Gewichtsbestimmung hinaus auch zur Ermittlung weiterer biometrischer Eigenschaften der Tiere wie beispielsweise eines Body-Condition-Score Maßes verwendet werden, um so Aussagen über den Gesundheitszustand des Tieres zu erhalten. So kann der Body-Condition-Score dazu benutzt werden, die körperliche Verfassung (Condition) einer Sau während des Produktionszyklus festzustellen.

Das erfindungsgemäße Verfahren kann auch vorteilhaft in einem Tiermanagement-System eingesetzt werden, wobei die ermittelten biometrischen Daten einem Datenverarbeitungssystem zugeführt werden, welches den erfassten Tieren beispielsweise individuelle Futterrationen und Futtermischungen zuteilt, aber auch Verhaltensauffälligkeiten feststellen kann.

Dazu muss jedes Tier individuell erkennbar sein. Die Erkennung kann aufgrund natürlicher Merkmale wie z.B. der Fellzeichnung der Tiere erfolgen, oder aber auch mithilfe künstlicher Erkennungsmerkmale wie implantierten Ohrmarken, RFID-Chips(RFID-Tags), aufgemalten Zeichen oder auf die Haut tätowierte Zeichen.

Durch den Einsatz eines statistischen Modells mit einem ausschließlich statistischem Zusammenhang zwischen den Parametern des Modells und dem Ergebnis ist das erfindungsgemäße Verfahren im Gegensatz zu den nach dem Stand der Technik üblichen Volumenmodellen vielseitig einsetzbar und kann mit geringem Aufwahd an die unterschiedlichsten Einsatzgebiete angepasst werden.

Während beispielsweise bei einem Volumenmodell, wie es aus dem Stand der Technik bekannt ist, der Einfluss des Knochenbaues auf das Gewicht des Tieres nicht berücksichtigt wird, kann dieser Einfluss bei dem erfindungsgemäßen statistischen Modell ebenfalls erfasst werden.

Darüber hinaus ist auch der Rechenaufwand wesentlich geringer als bei einem Volumenmodell. Dies gilt insbesondere bei Einsatz eines statistischen Modells.

**Patentansprüche**

1. Verfahren zur Bestimmung biometrischer Eigenschaften von Schweinen umfassend die Bestimmung des Gewichtes von Schweinen, wobei

   - mit einem Kamerasystem zumindest eine Aufnahme des Schweines erstellt wird,
   - wobei die Aufnahmen von beliebigen Aufnahmestandpunkten, um und über dem Schwein, aus durchgeführt wird,
   - wobei mit Methoden der Bildverarbeitung, vorzugsweise der Mustererkennung, markante Punkte (M1SA, M20AR, ... M35×KM) der Körperoberfläche ermittelt werden,
   - wobei weiterhin aus den markanten Punkten (M1SA, M20AR,... M35xKM) der Oberfläche Parameter eines statistischen Modells des Schweines erstellt werden und
   - wobei mittels dem statistischem Modell die biometrischen Eigenschaften des Schweines bestimmt werden **dadurch gekennzeichnet, dass** bei der Bestimmung des Gewichtes von Schweinen aus den markanten Funkten (M1SA, M20AR, ... M35xKM) der Oberfläche

      - geodäsische und/oder euklidische Längenmaße wie die Schulter-Ohr-Länge, die Schwanz-Schulter-Länge,
      - geodäsische und/oder euklidische Breitenmaße wie die Schulter- Brust - und Flankenbreite und
      - geodätische und/oder euklidische Flächen an der Oberfläche des Tierkörpers, und
      - Formeigenschaften von definierten Köperstellen wie der hintere-Bereich in elliptischer, konkaver, usw. Ausprägung, und
      - Kontur des Körpers, und
      - Umfangsmaße wie der Brustkorbumfang und der Flankenumfang ermittelt werden, und
      - dass diese Maße als Parameter eines Gewichtsmodelles des Schweines vorgesehen sind.

2. Verfahren nach Anspruch 1, **dadurch gekennzeichnet, dass** markante Punkte (M25-KL,...) an der Oberfläche und Parameter indirekt durch geeignete statistische Modelle berechnet werden, welche dann im nächsten Schritt in die Ermittlung biometrischer Eigenschaften mit einfließen.

3. Verfahren nach einem der Ansprüche 1 oder 2, **dadurch gekennzeichnet, dass** das selektierte Schwein automatisch nachverfolgt wird und die Daten aus den Aufnahmen für die Verbesserung der Messgenauigkeit herangezogen werden.

4. Verfahren nach einem der Ansprüche 1 bis 3, **dadurch gekennzeichnet, dass** die Bestimmung der biometrischen Eigenschaften von Schweinen mittels manueller oder automatischen Auslösung durchgeführt wird.

5. Verfahren nach einem der Ansprüche kennzeichnet, dass mittels Transformation der Daten in ein definiertes Standard-Körpermodell oder durch Verwendung Körperposen-invarianter Messpunkte, wie gekrümmt, gebogen, verschiedener Kopf und Beinstellungen, die biometrischen Eigenschaften eines Schweins trotz unterschiedlicher Körperposen und Haltungen bestimmt werden können.

6. Verfahren nach einem der Ansprüche 1 bis 5, **dadurch gekennzeichnet, dass** durch die Aufnahme und Analyse der Körperoberfläche und unter Berücksichtigung der markanten Punkte (M1SA, M20AR,... M35xKM), die Ermittlung der Art und Rasse des Schweins ermöglicht wird.

7. Verfahren nach einem der Ansprüche 1 bis 6, **dadurch gekennzeichnet, dass** die ermittelten biometrischen Daten einein Datenverarbeitungssystem eines Tiermanagement-Systems zugeführt werden und dass auf Basis der erfassten Daten für jedes Tier individuelle Betreuungsmaßnahmen festgelegt werden.

8. Verfahren nach einem der Ansprüche 1 bis 7, **dadurch gekennzeichnet, dass** jedes Tier durch Auswertung natürlicher oder künstlicher optischer Merkmale individuell erkannt wird.

9. Verfahren nach einem der Ansprüche 1 bis 8, **dadurch gekennzeichnet, dass** auf Basis der ermittelten biometrischen Eigenschaften jedes Tier individuell behandelt, insbesondere individuell gefüttert wird.

**10.** Vorrichtung mit Mitteln zur Durchführung eines Verfahrens nach einem der Ansprüche 1 bis 9.

**Claims**

**1.** Method for determining biometric properties of pigs, comprising the determination of the weight of pigs, wherein

- at least one image of the pig is created using a camera system,
- wherein the images are taken from any desired recording positions around and above the pig,
- wherein image processing methods, preferably pattern recognition, are used to determine distinctive points (M1SA, M20AR,... M35xKM) of the body surface,
- wherein parameters of a statistical model of the pig are also created from the distinctive points (M1SA, M20AR,... M35xKM) of the surface, and
- wherein the biometric properties of the pig are determined using the statistical model,
**characterized in that,** when determining the weight of pigs from the distinctive points (M1SA, M20AR,... M35xKM) of the surface,

- geodesic and/or Euclidean length dimensions such as the shoulder-ear length, the tail-shoulder length,
- geodesic and/or Euclidean width dimensions such as the shoulder, chest and flank width, and
- geodesic and/or Euclidean areas on the surface of the animal body, and
- shape properties of defined sites of the body such as the rear region, in an elliptical, concave, etc. form, and

- the contour of the body, and

- circumference dimensions such as the chest circumference and the flank circumference are determined, and
- **in that** these dimensions are provided as parameters of a weight model of the pig.

**2.** Method according to Claim 1, **characterized in that** distinctive points (M25-KL, ...) on the surface and parameters are calculated indirectly by means of suitable statistical models which are then concomitantly included in the determination of biometric properties in the next step.

**3.** Method according to either of Claims 1 and 2, **characterized in that** the selected pig is tracked automatically and the data from the images are used to improve the measurement accuracy.

**4.** Method according to one of Claims 1 to 3, **characterized in that** the biometric properties of pigs are determined by means of manual or automatic triggering.

**5.** Method according to one of Claims 1 to 4, **characterized in that** the biometric properties of a pig can be determined despite different body poses and postures by transforming the data into a defined standard body model or by using body-pose-invariant measurement points such as curved, bent, different head and leg positions.

**6.** Method according to one of Claims 1 to 5, **characterized in that** it is possible to determine the type and breed of the pig by recording and analysing the body surface and by taking into account the distinctive points (M1SA, M20AR,... M35xKM).

**7.** Method according to one of Claims 1 to 6, **characterized in that** the determined biometric data are supplied to a data processing system of an animal management system, and **in that** individual care measures are determined for each animal on the basis of the captured data.

**8.** Method according to one of Claims 1 to 7, **characterized in that** each animal is individually identified by evaluating natural or artificial optical features.

**9.** Method according to one of Claims 1 to 8, **characterized in that** each animal is treated individually, in particular is fed individually, on the basis of the determined biometric properties.

**10.** Apparatus having means for carrying out a method according to one of Claims 1 to 9.

**Revendications**

**1.** Procédé, destiné à déterminer des caractéristiques biométriques de porcs, comprenant la détermination du poids de porcs,

- à l'aide d'un système de caméras étant élaboré au moins un enregistrement du porc,
- les enregistrements étant réalisés à partir de positions d'enregistrement quelconques, autour et au-dessus du porc,
- à l'aide de méthodes du traitement d'images, de préférence de la reconnaissance de forme, des points marquants (M1SA, M20AR, ..., M35xKM) de la surface corporelle étant déterminés,
- par ailleurs, à partir des points marquants (M1SA, M20AR, ..., M35xKM) de la surface, des paramètres d'un modèle statistique du porc étant établis et
- à l'aide du modèle statistique, les caractéristiques biométriques du porc étant déterminées,

**caractérisé en ce que** lors de la détermination du poids de porcs à partir des points marquants (M1SA, M20AR, ..., M35xKM) de la surface sont déterminés

- des cotes de longueur géodésiques et/ou euclidiennes, telles que la longueur épaule/oreille, la longueur queue/épaule,
- des cotes de largeur géodésiques et/ou euclidiennes, telles que la largeur des épaule de la poitrine et des flancs et
- des surfaces géodésiques et/ou euclidiennes sur la surface corporelle de l'animal et
- des caractéristiques de forme de zones corporelles définies, comme la zone postérieure, en expression elliptique, concave, etc., et
- le contour du corps et
- des cotes circonférentielles, comme la circonférence de la cage thoracique et la circonférence des flancs et
- **en ce que** lesdites cotes sont prévues comme paramètre d'un modèle pondéral du porc.

**2.** Procédé selon la revendication 1, **caractérisé en ce que** des points marquants (M25-KL, ...) sur la surface et des paramètres sont calculés indirectement par des modèles statistiques adaptés, lesquels sont ensuite intégrés dans l'étape suivante dans la détermination de caractéristiques biométriques.

**3.** Procédé selon l'une quelconque des revendications 1 ou 2, **caractérisé en ce que** le porc sélectionné est suivi automatiquement et les données émanant des enregistrements sont prises en compte pour améliorer la précision de mesure.

**4.** Procédé selon l'une quelconque des revendications 1 à 3, **caractérisé en ce que** la détermination des caractéristiques biométriques de porcs est réalisée à l'aide d'une activation manuelle ou automatique.

**5.** Procédé selon l'une quelconque des revendications 1 à 4, **caractérisé en ce que** par transformation des données en un modèle corporel standard défini ou par l'utilisation de points de mesure invariants de poses corporelles, comme curvilignes, incurvés, de différentes positions de la tête et des pattes, les caractéristiques biométriques d'un porc peuvent être déterminées malgré différentes poses corporelles et postures.

**6.** Procédé selon l'une quelconque des revendications 1 à 5, **caractérisé en ce que** par l'enregistrement et l'analyse de la surface corporelle et en considérant les points marquants (M1SA, M20AR, ..., M35xKM), la détermination du type et de la race du porc est rendue possible.

**7.** Procédé selon l'une quelconque des revendications 1 à 6, **caractérisé en ce que** les données biométriques déterminées sont amenées vers un système de traitement de données d'un système de gestion animale et **en ce que** sur la base des données saisies pour chaque animal, des actions de prise en charge individuelles sont fixées.

**8.** Procédé selon l'une quelconque des revendications 1 à 7, **caractérisé en ce que** chaque animal est identifié individuellement par évaluation de caractéristiques visuelles naturelles ou artificielles.

**9.** Procédé selon l'une quelconque des revendications 1 à 8, **caractérisé en ce que** sur la base des caractéristiques biométriques déterminées, chaque animal est traité individuellement, notamment nourri individuellement.

**10.** Dispositif, pourvu de moyens destinés à réaliser un procédé selon l'une quelconque des revendications 1 à 9.

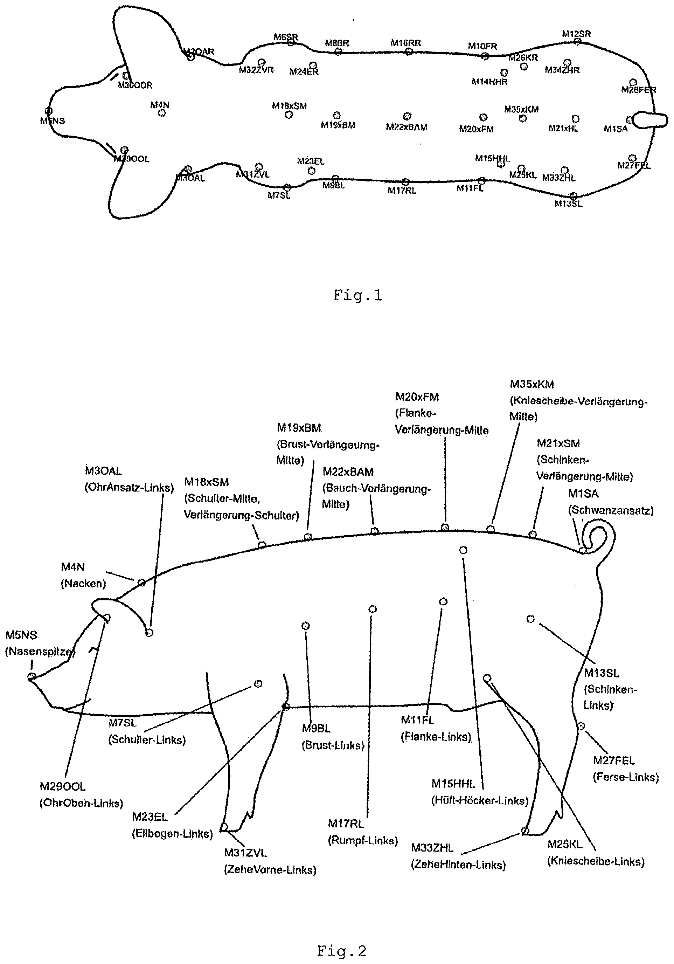

Fig.1

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9214116 A
- DE 19619099 C1
- WO 9523336 A
- WO 2014026765 A

**In der Beschreibung aufgeführte Nicht-Patentliteratur**

- **PAOLO MENESATTI et al.** A low cost stereovision system to estimate size and weight of live sheep. *Computers and Electronics in Agriculture,* 01. April 2014, vol. 103, 33-38